# EUROPÄISCHE PATENTANMELDUNG

(11) **EP 1 202 078 A2**
(43) Veröffentlichungstag der Anmeldung: **02.05.2002**
(21) Anmeldenummer: 01125175.8
(22) Anmeldetag: 23.10.2001
(51) Int. Cl.: G01W 1/10, G08B 21/10, G01N 27/04

(54) **Vorrichtung und Verfahren zur Ermittlung eines Schneeprofils sowie System hiermit zur Ermittlung des Lawinenwahrscheinlichkeit**

(30) Priorität: 25.10.2000 DE 10052892
(71) Anmelder: Edlhuber, Christian, 82481 Mittenwald (DE)
(72) Erfinder: Edlhuber, Christian, 82481 Mittenwald (DE)

(57) **Zusammenfassung**

Beschrieben wird eine Vorrichtung zur Ermittlung eines Schneeprofils über die Höhenerstreckung einer Schneeschicht (6) hinweg, mit einem langgestreckten Trägerkörper (4), welcher in der Schneeschicht (6) im wesentlichen senkrecht zum Schneeschichtungsverlauf anordenbar ist und an seiner Außenseite wenigstens zwei elektrisch voneinander isolierte Elektrodengruppen (10, 10b,...) trägt, wobei jede Elektrodengruppe am Trägerkörper (4) umfangsseitig voneinander beabstandete und elektrisch voneinander isolierte Elektroden im wesentlichen auf einer gemeinsamen Umfangslinie liegend aufweist, welche die elektrische Leitfähigkeit des zwischen ihnen vorhandenen Mediums (Schnee) messen. Gegenstand der vorliegenden Erfindung ist weiterhin ein Verfahren zur Ermittlung des Schneeprofils über die Höhenerstreckung der Schneeschicht (6) hinweg und ein System zur Ermittlung der Lawinenwahrscheinlichkeit in einem zu überwachenden Gebiet unter Verwendung der Vorrichtung und/oder unter Anwendung des Verfahrens. Mit dem Gegenstand der Erfindung können Schneeprofile rasch und exakt ohne großen personellen und finanziellen Aufwand in Echtzeit erhalten werden.

## Beschreibung

Die vorliegende Erfindung betrifft eine Vorrichtung zur Ermittlung eines Schneeprofils über die Höhenerstreckung einer Schneeschicht hinweg, sowie ein Verfahren zur Ermittlung eines derartigen Schneeprofils und ein System zur Ermittlung der Lawinenwahrscheinlichkeit in einem zu überwachenden Gebiet, welches die Vorrichtung und/oder das Verfahren anwendet.

Lawinen gehören im Gebirge zweifelsohne mit zu den größten objektiven Gefahrenquellen. Lawinenabgänge fordern alljährlich alleine im Alpenraum Dutzende von Toten und verursachen Schäden in mehrstelliger Millionenhöhe sowohl an der Infrastruktur (z.B. Gebäude, Verkehrswege etc.) als auch in der Natur (z.B. Waldgebiete).

Seit geraumer Zeit ist es bekannt, besonders gefährdete Gebiete, Siedlungen, Straßen, Schienenwege etc. durch aufwendige Gegenmaßnahmen, sogenannte Lawinenverbauungen so gut als möglich zu schützen. Gleichwohl kommt es immer wieder zu teilweise völlig überraschenden Lawinenabgängen mit teilweise katastrophalen Konsequenzen, wie die Lawinenunglücke der letzten beiden Winter gezeigt haben. Abgesehen von Lawinenabgängen, welche Zerstörungen und Schäden an stationären Gegenständen, also Gebäuden, Verkehrswegen etc. verursachen, stellen auch Lawinenabgänge in unbebauten oder unbewohnten Gebieten eine Gefahrenquelle insofern dar, als Bergsteiger, Skitourengeher, Forstarbeiter etc. durch sie gefährdet werden. Insbesondere Skitourengeher stellen hierbei die Gruppe mit dem höchsten Risikopotential, da sie immer wieder - sei es aus Leichtsinn, sei es aus Unkenntnis - selbst Lawinen (z.B. sogenannte Schneebretter) auslösen, von welchen sie dann mitgerissen und verschüttet werden.

Die sogenannte Lawinenvorhersage oder auch sogenannte Lawinenwarndienste haben sich daher in den letzten Jahrzehnten zunehmend etabliert und aufgrund der wachsenden Erfahrung ist es derartigen Einrichtungen auch möglich geworden, potentielle Lawinengefahren zutreffend einschätzen zu können, so daß entsprechende Warnungen und Empfehlungen herausgegeben werden können. Lawinenwarndienste sammeln gebietsbezogene und gegebenenfalls auch regionale bzw. überregionale Informationen hinsichtlich Schneehöhe, Neuschneezuwachs, Temperaturverlauf, Windrichtung und -geschwindigkeit, Hangneigung etc. und sind in der Lage, aus diesen Faktoren die momentane Lawinenwahrscheinlichkeit oder Lawinengefahr zu extrapolieren.

Während Faktoren wie absolute Schneehöhe, Neuschneezuwachs, Temperaturprofil, Hangneigung und Windparameter vergleichsweise einfach ermittelt werden können, stellt die Gewinnung eines sogenannten Schneeprofils, welches die Abfolge, Mächtigkeit, Beschaffenheit und Zusammensetzung der einzelnen Schneeschichten wiedergibt, welche die gesamte Schneehöhe ausmachen, ein zeit- und arbeitsintensives Unterfangen dar, insbesondere dann, wenn an einer Mehrzahl von Meßpunkten eine entsprechende Mehrzahl von Schneeprofilen gewonnen werden soll. Zur Erzielung eines Schneeprofils ist es unabdingbar, in der geschlossenen Schneedecke einen Graben oder Schacht auszuheben, der bis auf den gewachsenen Boden hinabreicht, wonach dann an der Graben- oder Schachtwand das Schneeprofil abgelesen und ermittelt werden kann. In aller Regel ist es auch unerläßlich, in bestimmten Abständen neue Gräben oder Schächte zu errichten, um ein neues, unverfälschtes Schneeprofil erhalten zu können, da an bereits erstellten Gräben oder Schächten durch Sonneneinstrahlung, Windeinwirkung etc. das freigelegte Schneeprofil nach und nach verfälscht wird.

Die Erstellung eines Schneeprofils stellt auch für Skitourengeher eine Möglichkeit dar, die aktuelle Lawinensituation in dem betreffenden Hang, der durchstiegen oder auch durchfahren werden soll festzustellen. Voraussetzung ist allerdings die Fähigkeit, aus dem gewonnenen Schneeprofil entsprechende korrekte Rückschlüsse ziehen zu können.

Das Heranziehen eines Schneeprofils stellt somit zweifelsohne eine durchaus zuverlässige Möglichkeit dar, Aussagen betreffend die Linienwahrscheinlichkeit oder Lawinengefahr machen zu können, die Gewinnung eines Schneeprofils ist jedoch in jedem Fall zeitaufwändig und arbeitsintensiv. Lawinenwarndienste, welche in aller Regel über entsprechendes Personal oder Helfer verfügen und deren Hauptaufgabe es ist, im Rahmen ihrer Dienstleistung unter anderem derartige Scheeprofile zu erstellen, führen dies zwar durch, obgleich es aufgrund der hierfür notwendigen Aufwendungen kostenintensiv ist. Viele Skitourengeher verfügen jedoch noch nicht einmal über die notwendigen Kenntnisse, aus einem gewonnenen Schneeprofil die notwendigen Rückschlüsse zu ziehen, so daß sie es von vorneherein unterlassen, sich auf diese Art und Weise eine Rückversicherung zu verschaffen. Auch wenn das Wissen oder die Erfahrung vorhanden ist, unterbleibt immer wieder die Herstellung eines Schneeprofils aus Bequemlichkeit oder aus Zeitgründen, was dann unter Umständen mit katastophalen Konsequenzen einhergeht.

Die vorliegende Erfindung hat es sich zur Aufgabe gemacht, die geschilderten Nachteile und Probleme zu beseitigen und schafft eine Vorrichtung zur Ermittlung eines Schneeprofils über die Höhenerstreckung einer Schneeschicht hinweg, mit welcher das Schneeprofil exakt und rasch ermittelbar ist, ohne daß hierzu umfangreiche Vorarbeiten, beispielsweise das Ausheben eines Grabens oder Schachtes notwendig währe. Weiterhin schafft die vorliegende Erfindung ein Verfahren zum Ermitteln eines Schneeprofils, mit welchem sich die gleichen Vorteile wie mit der erfindungsgemäßen Vorrichtung erzielen lassen, sowie ein System zur Ermittlung der Lawinenwahrscheinlichkeit in einem zu überwachenden Gebiet, welches sich die erfindungsgemäße Vorrichtung und/oder das erfindungsgemäße Verfahren zu Nutze macht.

Der Gegenstand der vorliegenden Erfindung, wie er sich im unabhängigen Vorrichtungsanspruch 1 bzw. unabhängigen Verfahrensanspruch 16 darstellt, basiert im wesentlichen auf der Erkenntnis, daß die einzelnen Schneearten in einem Schneeprofil unterschiedliche elektrische Leitfähigkeiten oder Leitwerte haben. Durch das Bereitstellen einer erfindungsgemäßen Vorrichtung mit einem langgestreckten Trägerkörper, welcher in der Schneeschicht im wesentlichen senkrecht zum Schneeschichtungsverlauf anordenbar ist und an seiner Außenseite wenigstens zwei Elektrodengruppen trägt, wobei jede Elektrodengruppe am Trägerkörper umfangsseitig voneinander beabstandete Elektroden im wesentlichen auf einer gemeinsamen Umfangslinie liegend aufweist, welche die elektrische Leitfähigkeit des zwischen ihnen vorhandenen Mediums messen, ist es möglich, wenigstens zwei unterschiedliche Schneearten im Schneeprofil (entsprechend den wenigstens zwei Elektrodengruppen) zu erfassen. Hierzu ist eine umfangreiche intrusive Vorarbeit, also beispielsweise das Ausheben eines Grabens oder Schachtes nicht mehr notwendig, da es genügt, den langgestreckten Trägerkörper im wesentlichen senkrecht zum Schneeschichtungsverlauf anzuordnen, also beispielsweise einfach in die Schneeschicht hinein zu stoßen, bis das untere Ende auf dem gewachsenen Boden aufsitzt. Durch Messung der elektrischen Leitfähigkeit in horizontaler Richtung und mehrfach über die Höhe der Schneeschicht hinweg läßt sich mit der erfindungsgemäßen Vorrichtung eine Aussage über den Aufbau des Schneeprofils und damit eine Aussage über die Lawinengefahr oder Lawinenwahrscheinlichkeit machen.

Auch das erfindungsgemäße Verfahren gemäß unabhängigem Anspruch 16 macht sich die Eigenschaft von Schnee zu Nutze, abhängig von seiner Beschaffenheit unterschiedliche elektrische Leitfähigkeit oder unterschiedliche Leitwerte zu haben. und umfaßt die folgenden Schritte: a) Bereitstellung eines langgestreckten Trägerkörpers, der wenigstens zwei Elektrodengruppen trägt, wobei jede Elektrodengruppe am Trägerkörper umfangseitig voneinander beabstandete Elektroden im wesentlichen auf einer gemeinsamen Umfangslinie liegend aufweist; b) Anordnen des Trägerkörpers in der Schneeschicht im wesentlichen senkrecht zum Schneeschichtungsverlauf; und c) Messen der elektrischen Leitfähigkeit des zwischen den einzelnen Elektroden der jeweiligen Elektrodengruppe vorhandenen Mediums.

Das "Medium", welches zwischen den einzelnen Elektroden der jeweiligen Elektrodengruppe vorhanden ist und dessen elektrische Leitfähigkeit mit der erfindungsgemäßen Vorrichtung bzw. im Zuge des erfindungsgemäßen Verfahrens gemessen wird, ist Schnee in seinen unterschiedlichen Auftretensweisen, Beschaffenheiten und Eigenschaften, also beispielsweise frischer Pulverschnee, weniger oder stark gepreßter Pulverschnee, Naßschnee, Firn, zu Eis gepreßter Firn oder (Blank- oder Wasser-) Eis.

Unter Anwendung der erfindungsgemäßen Vorrichtung und/oder des erfindungsgemäßen Verfahrens läßt sich im Rahmen der vorliegenden Erfindung gemäß Anspruch 26 ein System zur Ermittlung der Lawinenwahrscheinlichkeit in einem zu überwachenden Gebiet realisieren, mit welchem sich ohne große Aufwendungen hinsichtlich Zeit, Personal und Kosten zuverlässige Aussagen über die Lawinenwahrscheinlichkeit oder Lawinengefahr treffen lassen. Ein nicht unerheblicher vorteilhafter Aspekt hierbei ist, daß die durch die erfindungsgemäße Vorrichtung bzw. mit dem erfindungsgemäßen Verfahren erhaltbaren Aussagen über den Aufbau oder die Beschaffenheit des Schneeprofils ohne menschliches Zutun gegebenenfalls auch über die gesamte Lawinensaison hinweg erhaltbar sind, so daß neben der personellen Einsparung auch keine Personengefahr mehr besteht, da keine Angestellten oder Helfer eines Lawinenwarndienstinstituts gefährdete Gebiete betreten müssen, um Schneeprofile von Hand zu erstellen.

Vorteilhafte Weiterbildungen und Ausgestaltungsformen der Erfindung sind Gegenstand der jeweiligen Unteransprüche.

Demnach weist jede Elektrodengruppe bevorzugt ein Elektrodenpaar auf. Mit einem derartigen Elektrodenpaar, welches demnach im wesentlichen auf einer gemeinsamen Umfangslinie des Trägerkörpers liegt, d.h., bei vertikal angeordnetem Trägerkörper im wesentlichen in der gleichen Höhenlage, kann die elektrische Leitfähigkeit in einer bestimmten Höhenlage auf den Trägerkörper bezogen bzw. der Schneeschicht bezogen, in welcher der Trägerkörper im wesentlichen senkrecht zum Schichtungsverlauf angeordnet ist, gemessen werden.

Liegen die Elektroden jedes Elektrodenpaares an diametral gegenüberliegenden Seiten des Trägerkörpers, ist die Meßstrecke zwischen den Elektroden eines jeden Elektrodenpaares maximal und unter den einzelnen Elektrodenpaaren der Elektrodengruppen stets gleich.

Bevorzugt ist eine Mehrzahl von Elektrodengruppen entlang der Längserstreckung des Trägerkörpers angeordnet, wobei weiterhin bevorzugt die Elektrodengruppen äquidistant zueinander entlang der Längserstreckung des Trägerkörpers angeordnet sind. Hierdurch ist - abhängig von der Anzahl der entlang der Längserstreckung des Trägerkörpers angeordneten Elektrodengruppen - eine mehr oder minder feine Auflösung über die Höhe der Schneeschicht hinweg und damit eine entsprechende Darstellung des Schneeprofils möglich.

Weist der Trägerkörper an einem seiner Endabschnitte (in aller Regel demjenigen Endabschnitt, der am tiefsten in der Schneeschicht zu liegen kommt) eine Referenzelektrode auf, kann neben dem Aufbau des Schneeprofils auch die Gesamthöhe der Schneeschicht erfaßt werden.

Bevorzugt ist der Trägerkörper aus einem elektrisch isolierenden Material gefertigt, so daß die Anbringung und gegenseitige Isolation der einzelnen Elektroden problemlos erfolgen kann.

In einer weiteren bevorzugten Ausgestaltungsform ist der Trägerkörper weiterhin aus einem thermisch schlecht leitenden Material gefertigt. Der Grund hierfür ist darin zu sehen, daß der Trägerkörper in seiner Gesamtheit insbesondere dann, wenn er beispielsweise im Falle einer stationären Meßstation über die gesamte Lawinensaison hinweg in der Schneeschicht verbleiben soll, sich in seiner Temperatur an den umgebenden Schnee anpassen soll und diese Temperatur auch beibehalten soll. Wie nämlich nachfolgend noch näher erläutert wird, ragt zumeist eine bestimmte Länge des Trägerkörpers in aller Regel über die obere Oberfläche der Schneeschicht hinaus ins Freie. Wäre der Trägerkörper aus einem thermisch gut leitenden Material gefertigt, würde dieser über die Schneeoberfläche hinausragende Teil beispielsweise durch Sonneneinstrahlung, Fönwind etc. erwärmt und diese Wärme würde in den unter der Schneedecke liegenden Teil des Trägerkörpers weitergeleitet werden. Die den Trägerkörper umgebende Schneeschicht würde daher zumindest ausgehend von der Schneeoberfläche bis in eine bestimmte Tiefe an- oder aufschmelzen und nach Wegfall der Erwärmung, beispielsweise über Nacht, wieder ausfrieren. Hierdurch würde der Trägerkörper zumindest über eine bestimmte Längenerstreckung hinweg nach und nach mit einer Eisschicht umgeben werden, welche im wesentlichen konstanten elektrischen Leitwert oder konstante elektrische Leitfähigkeit hat, so daß eine korrekte Erfassung des Schneeprofils nicht mehr möglich wäre. Als thermisch schlecht leitendes Material für den Trägerkörper kommen gemäß einer bevorzugten Ausgestaltungsform Kunststoffe oder Kunstharze in Frage. Hierdurch ist der Trägerkörper auch gleichzeitig elektrisch isolierend ausgebildet. Eine weitere Möglichkeit, welche allerdings aus Gründen der Haltbarkeit insbesondere gegenüber Witterungseinflüssen unter Umständen nicht als erste Wahl zu betrachten ist, wäre, den Trägerkörper aus Holz zu fertigen.

Bevorzugt sind die Elektroden der einzelnen Elektrodengruppen über im Inneren des Trägerkörpers verlaufende Signalleitungen mit eine externen Auswerte- und Anzeigeeinheit verbindbar. Insbesondere wenn der Trägerkörper aus Kunststoff oder Kunstharz gefertigt ist, kann der Trägerkörper beispielsweise in Form eines hohlen Rohres ausgebildet werden, so daß sich Signalleitungen im Inneren des Trägerkörpers problemlos verlegen lassen. Wird der Trägerkörper aus Stabilitätsgründen aus einem massiven Kunststoff- oder Kunstharzteil gefertigt, lassen sich die Signalleitungen im Zuge der Herstellung des Trägerkörpers in das Material mit einbetten und sind hierdurch sowohl elektrisch voneinander isoliert als auch in optimaler Weise geschützt. Wie in der nachfolgenden Beschreibung noch erläutert werden wird, kann die externe Auswerte- und Anzeigeeinheit sowohl ein tragbares Gerät, als auch ein stationäres, dem jeweiligen Trägerkörper fest zugeordnetes Gerät sein. Im Falle eines tragbaren Gerätes als Auswerte- oder Anzeigeeinheit kann beispielsweise ein Skitourengeher dieses Gerät mitführen, am in den Schnee gesteckten Trägerkörper anschließen und Aussagen über das Schneeprofil und die sich hieraus ergebende Lawinenwahrscheinlichkeit erhalten. Personal oder Helfer von Lawinenwarndiensten können mit einer Auswerte- und Anzeigeeinheit einzelne Trägerkörper nacheinander abgehen, die Einheit mit dem jeweiligen Trägerkörper verbinden und ebenfalls entsprechende Auswerte- und Anzeigeergebnisse erhalten. Im Falle stationärer Auswerte- und Anzeigeeinheiten, welche dem jeweiligen Trägerkörper fest zugeordnet sind, übermitteln diese bevorzugt ihre entsprechenden Auswerte- und Anzeigeergebnisse an eine zentrale Sammelstation. Diese Datenübertragung erfolgt bevorzugt mit einer drahtlosen Übertragungstechnik.

Die Elektroden der einzelnen Elektrodengruppen können in das Material des Trägerkörpers eingebettet sein. Bei der Herstellung des Trägerkörpers aus Kunststoff oder Kunstharz erfolgt dies vorteilhafterweise im Zuge der Herstellung zusammen mit dem Einbetten oder Eingießen der entsprechenden Signalleitungen.

Alternativ hierzu könnend die Elektroden der einzelnen Elektrodengruppen nach der Herstellung des Trägerkörpers auf das Material des Trägerkörpers aufgebracht werden. Hierzu können beispielsweise die Elektroden auf das Material des Trägerkörpers aufgeklebt werden oder aber sie sind auf das Material des Trägerkörpers aufgedampft. Letztere Vorgehensweise ist im Sinne der Bestrebumgen, den Trägerkörper thermisch so schlecht leitend oder aufnahmefähig wie nur möglich zu machen, bevorzugt.

In einer weiteren bevorzugten Ausgestaltungsform kann der Trägerkörper ein Skistock sein. Insbesondere Skitourengehern wird hierdurch eine Möglichkeit gegeben, den Trägerkörper quasi als unverzichtbares Teil ihrer Ausrüstung mitführen zu können/müssen.

Eine vorteilhafte Weiterbildung des erfindungsgemäßen Verfahrens zeichnet sich durch endseitiges freies Aufhängen des Trägerkörpers an einer Aufhängevorrichtung, das Einschneienlassen des Trägerkörpers und das Belassen des Trägerkörpers in der sich so bildenden Schneeschicht aus. Durch diese Vorgehensweise ist sichergestellt, daß der Trägerkörper außer zu der umgebenden Schneeschicht keinerlei thermisch leitenden Kontakt beispielsweise zum Boden hat, so daß ein optimaler Temperaturangleich zwischen Trägerkörper und umgebender Schneedecke und damit eine geringstmögliche Neigung zur Aufschmelzung der den Trägerkörper umgebenden Schneeschicht gegeben ist. Auch läßt sich hierdurch der Zuwachs der Schneeschicht kontinuierlich messen und überwachen.

Eine weitere bevorzugte Ausführungsform des erfindungsgemäßen Verfahrens zeichnet sich - wie bereits weiter oben dargelegt - durch drahtloses Übertragen der Ausgangssignale der Elektrodengruppen oder der Anzeige- und Auswerteangaben der externen Auswerte- und Anzeigeeinheit an eine zentrale Meßwert-Sammelstelle aus. Gegebenenfalls und gemäß einer weiteren Ausgestaltungsform können die entsprechenden Ausgangssignale einer Mehrzahl von Trägerkörpern drahtlos an die zentrale Meßwert-Sammelstelle übertragen werden. Hierdurch ist es möglich, auch ein größeres Gebiet, beispielsweise ein gesamtes Lawineneinzugsgebiet mit einer Mehrzahl von Trägerkörpern und einer einzigen zentralen Meßwert-Sammelstelle zu überwachen.

Ist der Trägerkörper in Form eines Skistocks ausgebildet, weist das erfindungsgemäße Verfahren noch die vorteilhafte Vorgehensweise auf, den Skistock in die Schneeschicht einzustechen, die Anzeige- und Auswerteangaben auf der externen Auswerte- und Anzeigeeinheit abzulesen und danach den Skistock aus der Schneeschicht wieder herauszuziehen. Die sich hieraus ergebenden Vorteile wurden bereits weiter oben dargelegt.

Weitere Einzelheiten, Aspekte und Vorteile der vorliegenden Erfindung ergeben sich aus der nachfolgenden Beschreibung anhand der Zeichnung.

Es zeigt:
Fig. 1 schematisch vereinfacht einen Horizontalschnitt durch eine erfindungsgemäße Vorrichtung;
Fig. 2 schematisch stark vereinfacht eine Gesamtansicht eines frei aufgehängten Trägerkörpers mit externer Auswerte- und Anzeigeeinheit; und
Fig. 3 schematisch vereinfacht den Aufbau eines Systems bestehend aus einer Mehrzahl von Trägerkörpern und einer zentralen Meßwert-Sammelstelle.

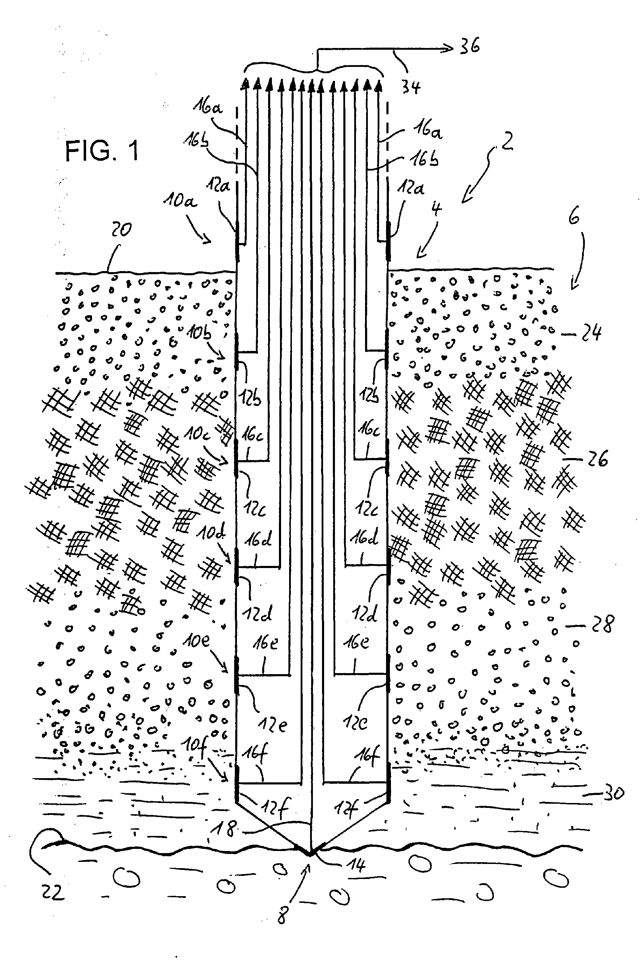

Fig. 1 zeigt schematisch vereinfacht einen Schnitt durch eine insgesamt mit 2 bezeichnete erfindungsgemäße Vorrichtung zur Ermittlung eines Schneeprofils, bzw. die Anordnung eines zu der Vorrichtung 2 gehörenden Trägerkörpers 4 in einer Schneeschicht 6. Der Trägerkörper 4 sei im dargestellten Ausführungsbeispiel ein langgestreckter Körper mit rundem Querschnitt, der an seinem unteren Ende zum leichteren Einstecken oder Einstoßen in die Schneeschicht 6 eine Spitze 8 aufweist. An seinem Außenumfang trägt der Trägerkörper 4 wenigstens zwei, bevorzugt jedoch mehrere Elektrodengruppen 10a, 10b,...10f, wobei jede Elektrodengruppe aus einem Elektrodenpaar 12a, 12b,...12f besteht. Im Bereich der Spitze 8 ist wenigstens eine weitere einzelne (Refernenz-) Elektrode 14 an dem Trägerkörper 4 angebracht oder ausgebildet.

Die einzelnen Elektroden der Elektrodenpaare 12a, 12b,...12f und die Elektrode 14 stehen über Signalleitungen 16a, 16b,...16f und 18 zur Außenseite des Trägerkörpers 4 hin in Verbindung. Ist der Trägerkörper 4 beispielsweise in Form eines innen hohlen Rohres ausgebildet, können die Signalleitungen 16a, 16b,...16f und 18 im Inneren des hohlen Rohrquerschnitts verlaufen. Ist der Trägerkörper 4 von massivem Querschnitt, werden die entsprechenden Signalleitungen im Inneren des Trägerkörpers 4 eingebettet.

Die Darstellung von Fig. 1 zeigt exemplarisch den Aufbau der Schneeschicht 6, welche zwischen einer Schneeoberfläche 20 und einer Bodenoberfläche 22 im dargestellten Ausführungsbeispiel aus insgesamt vier Schichten bestehen möge, nämlich einer oberen Naßschneeschicht 24, einer sich hieran anschließenden Pulver- oder Trockenschneeschicht 26 und einer unter der Pulverschneeschicht 26 liegenden weiteren Naßschneeschicht 28, welche allmählich in eine mehr oder minder dicke Eisschicht 30 übergeht. Die in Fig. 1 dargestellte Schichtabfolge in der Schneeschicht 6 ist labil, da die zwischen den beiden Naßschneeschichten 24 und 28 liegende Pulver- oder Trockenschneeschicht 26 eine gefährliche Gleitschicht bildet, also bei einer entsprechenden Hangneigung und bei einem Einschneiden der oberen Naßschneeschicht 24 beispielsweise durch eine Skispur der Abriß eines Schneebretts möglich ist.

Die einzelnen Elektroden der Elektrodenpaare 12a, 12b,...12f und die Elektrode 14 können an dem Trägerkörper 4 auf unterschiedliche Weise befestigt werden. Wird der Trägerkörper 4 beispielsweise aus einem Kunststoff oder Kunstharz gefertigt, können die betreffenden Elektroden und auch deren Signalleitungen 16a, 16b,...16f und 18 im Zuge der Herstellung des Trägerkörpers 4 in das Kunststoff- oder Kunstharzmaterial eingebettet werden, wenn der Trägerkörper 4 mit massivem Querschnitt ausgelegt wird. Wird der Trägerkörper 4 in Form eines beispielsweise innen hohlen Rohres gefertigt, lassen sich immer noch die einzelenen Elektroden der Elektrodenpaare, 12a, 12b,...12f und die Elektrode 14 in der Kunststoff- oder Kunstharzaußenwand des Trägerkörpers 4 einbetten oder eingießen, die zugehörigen Signalleitungen verlaufen jedoch dann frei im Inneren des Rohrquerschnitts. Weiterhin ist es möglich, im Falle einer Ausbildung des Trägerkörpers 4 mit hohlem Querschnitt die einzelnen Elektroden der Elektrodenpaare 12a, 12b,...12f und die Elektrode 14 nachträglich an der Außenfläche des Trägerkörpers 4 anzubringen und die zugehörigen Signalleitungen in das Innere des Trägerkörpers 4 zu führen. Hierzu können die Elektroden beispielsweise angeklebt oder auch durch ein entsprechendes Abscheideverfahren aufgebracht, beispielsweise aufgedampft werden. Die Ausbildung des Trägerkörpers 4 aus einem Kunststoffmaterial oder Kunstharzmaterial ist aus den bereits eingangs genannten Gründen besonders vorteilhaft, da derartige Materialien elektrisch isolierend sind und in der Regel auch schlechte thermische Leitfähigkeit haben, also weitestgehend vermieden ist, daß das Material des Trägerkörpers 4 Umgebungswärme beispielsweise aufgrund von Sonneneinstrahlung aufnimmt und in die den Trägerkörper 4 umgegebende Schneeschicht 6 einleitet, wodurch die unmittelbar an der Außenwand des Trägerkörpers 4 anliegenden Bereiche der Schneeschicht 6 bzw. der einzelnen Schichten 24, 26 und gegebenenfalls auch 28 und 30 ganz oder teilweise an- oder abschmelzen würden, was die Meßwerte erheblich verfälschen würde, wie sich nachfolgend noch ergeben wird.

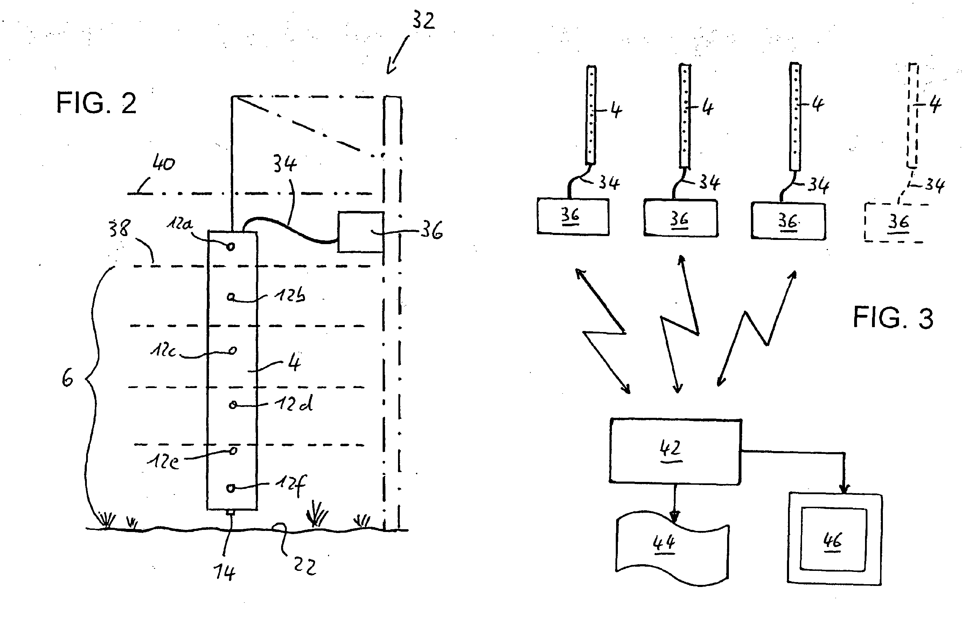

Fig. 2 zeigt die Möglichkeit, den Trägerkörper 4 mit den sich am Außenumfang befindlichen und bevorzugt gemäß Fig. 1 diametral gegenüberliegenden Elektroden der Elektrodenpaare 12a, 12b,...12f an einem ortsfesten Gestell 32 frei aufzuhängen. Der Trägerkörper 4 im Ausführungsbeispiel von Fig. 2 weist nicht die untere Spitze 8 gemäß Fig. 1 auf, da er im Gegensatz zum Trägerkörper 4 von Fig. 1 nicht in eine bereits bestehende Schneeschicht 6 eingestochen oder -gerammt wird, sondern bei noch nicht vorhandener Schneeschicht 6 an seinem oberen freien Ende frei am Gestell 32 aufgehängt wird. Die einzelnen Signalleitungen, 16a, 16b,...16f und 18 werden bevorzugt zu einer gemeinsamen Leitung oder einem gemeinsamen Kabel 34 zusammengefaßt, welches vom Trägerkörper 4 zu einer externen Auswerte- und Anzeigeeinheit 36 verläuft.

Der Trägerkörper 4 wird in der Anordnung gemäß Fig. 2 mit Hilfe des Gestells 32 frei hängend angeordnet und mit dem Kabel 34 mit der Auswerte- und Anzeigeeinheit 36 verbunden. Durch fortlaufende Schneefälle wird der Trägerkörper 4 nach und nach ausgehend von der Bodenfläche 22 her eingeschneit, wie durch gestrichelten Linien in Fig. 2 dargestellt. Die Aufhängung des Trägerkörpers 4, sowie auch seine gesamte Längenerstreckung wird so bemessen und aufeinander abgestimmt, daß auch nach Erreichen einer maximal zu erwartenden Schneehöhe 38 noch ein bestimmter Restbetrag des Trägerkörpers 4 über die Schneeoberfläche 20 hinausragt, so daß zumindest ein Elektrodenpaar (Elektrodenpaar 12a) über der maximalen Schneehöhe 38 bzw. der Schneeoberfläche 20 liegt, wie auch in Fig. 1 gezeigt.

Die erfindungsgemäße Vorrichtung 2 bzw. das erfindungsgemäße Verfahren macht sich die Eigenschaft von Schnee zunutze, abhängig von seiner Art oder Beschaffenheit unterschiedlichen elektrischen Leitwert oder unterschiedliche elektrische Leitfähigkeit zu haben. Die nachfolgende Tabelle führt elektrische Widerstandswerte unterschiedlicher Schneearten auf, wobei diese Tabelle weder als vollständig noch als exakte Werte angebend betrachtet werden soll; sie soll lediglich vor Augen führen, daß unterschiedliche Schneearten teilweise ganz erheblich voneinander abweichende Widerstandswerte und damit elektrische Leitwerte haben, was eine Erkenntnis ist, auf der die vorliegende Erfindung im wesentlichen fußt:

| **SCHNEEART** | **ELEKTRISCHER WIDERSTAND** |
|---|---|
| Pulverschnee | 26.000 kΩ |
| auf die Hälfte des ursprünglichen Volumens gepreßter Pulverschnee | 13.000 kΩ |
| auf ein Viertel des ursprünglichen Volumens gepreßter Pulverschnee | 7.000 kΩ |
| Naßschnee | 4.000 kΩ |
| Eis | 2.000 kΩ |
| zum Vergleich: Wasser | 400 kΩ |

Man erkennt aus der obigen Tabelle, daß Pulverschnee beispielsweise einen um das 6,5-fach höheren elektrischen Widerstand als Naßschnee hat. Auch unterschiedlich stark gepreßter Pulverschnee hat gegenüber frisch gefallenem Pulverschnee deutlich geringere Widerstandswerte, welche jedoch immer noch deutlich über dem Widerstandswert von Naßschnee, Eis oder gar Wasser liegen. Im Ausführungsbeispiel von Fig. 1 würde dies bedeuten, daß die in der Naßschneeschicht 24 liegenden Elektroden des Elektrodenpaares 12b einen geringeren elektrischen Widerstand und damit eine höhere elektrische Leitfähigkeit messen, als die darunter in der Pulverschneeschicht 26 liegenden Elektroden der Elektrodenpaare 12c und 12d. Die Elektroden des Elektrodenpaares 12e in der Naßschneeschicht 28 messen wiederum höhere elektrische Leitfähigkeit und die sich im Eis befindlichen Elektroden des Elektrodenpaares 12f messen die höchste elektrische Leitfähigkeit. Demgegenüber mißt das Elektrodenpaar 12a, welches über der Schneeoberfläche 20 und damit außerhalb der Schneeschicht 6 liegt, eine elektrische Leitfähigkeit von Null (Widerstand geht gegen Unendlich), da sich dieses Elektrodenpaar 12a in der Luft befindet.

Die Messung der elektrischen Leitfähigkeit und damit des elektrischen Widerstands erfolgt an den einzelnen Elektrodenpaaren 12a, 12b,...12f auf bekannte Weise, beispielsweise durch Anlegen einer bestimmten Spannung oder eines bestimmten Potentials an jeweils ein Elektrodenpaar und Messung des durch das Medium (hier: Schnee) fließenden Stromes, in welchem sich das betreffende Elektrodenpaar befindet, oder durch Ermittlung, wie ein Konstantstrom durch das Medium Schnee abgeschwächt wird.

Bevorzugt werden hierbei die Elektroden in Längsrichtung des Trägerkörpers 4 gesehen sukzessive oder sequentiell aufgeschaltet, um ein Übersprechen zwischen einander in Längsrichtung des Trägerkörpers 4 benachbarten Elektrodenpaaren zu vermeiden. Alternativ hierzu oder zusätzlich können die Elektroden eines Elektrodenpaares in einer bestimmten Höhenlage, beispielsweise die Elektroden des Elektrodenpaares 12e gegenüber den darunterliegenden Elektroden des Elektrodenpaares 12f und den darüberliegenden Elektroden des Elektrodenpaares 12d in Umfangsrichtung des Trägerkörpes 4 um 90° vesetzt angeordnet sein usw.

Aufgrund der bevorzugt einander gegenüberliegenden oder diametralen Anordnung der Elektroden eines jeden Elektrodenpaares kann mit der Ausgestaltungsform von Fig. 1 zunächst in Horizontalrichtung gemessen werden, d.h. über den elektrischen Leitfähigkeitswert bzw. den elektrischen Widerstandwert kann eine Aussage über die Art und Beschaffenheit der jeweiligen Schneeschicht 24 oder 26 oder 28 oder 30 getroffen werden. Man erkennt unmittelbar aus der Darstellung von Fig. 1, daß, je mehr Elektrodenpaare entlang der Längserstreckung des Trägerkörpers 4 angeordnet werden, um so höher die Auflösung des hiermit erzielbaren Schneeprofils ist. Werden beispielsweise die einzelnen Elektrodenpaare mit einem axialen Abstand von 5 mm am Außenumfang des Trägerkörpers 4 angeordnet und hat weiterhin jede Elektrode des Elektrodenpaares eine axiale Längserstreckung von ebenfalls 5 mm, kann das Profil der Schneeschicht 6 in Schritten von 5 mm abgetastet oder abgefragt und letztendlich auch dargestellt werden. Eine noch kleinere Ausbildung der Elektroden und ein noch geringerer Abstand hiervon ermöglicht eine noch feinere Auflösung und umgekehrt. Aufgrund der Tatsache, daß beim Wechsel von einer Schneeschicht zur anderen Schneeschicht sich der elektrische Leitwert oder die Leitfähigkeit bzw. der elektrische Widerstandswert teilweise ganz erheblich ändert, wie aus obiger Tabelle hervorgeht, kann bei einem sequentiellen Abfragen der einzelnen Elektrodenpaare in Längsrichtung des Trägerkörpers 4 eine verläßliche Aussage über Anzahl der wechselnden Schneeschichten, deren Höhe oder Mächtigkeit und deren Art und Beschaffenheit gewonnen werden.

Durch Anlegen eines entsprechenden Signales (Spannung, Strom) an die Spitzen- oder Referenzelektrode 14 am axial untersten Ende des Trägerkörpers 4 und einer entsprechenden in Längsrichtung des Trägerkörpers 4 gesehen sukzessive oder sequentiell erfolgenden Vergleichs-Gegenschaltung über die einzelnen Elektrodenpaare 12a, 12b,...12f in Fig. 1 kann darüber hinaus die Gesamtdicke oder -mächtigkeit der Schneeschicht 6 ermittelt werden. In Fig. 1 mißt das Elektrodenpaar 12a eine elektrische Leitfähigkeit von Null bzw. einen gegen Unendlich gehenden elektrischen Widerstand, da sich dieses Elektrodenpaar 12a in der Luft befindet. Über einen Rückschluß, in welcher Höhenlage das Elektrodenpaar 12a gegenüber der Spitzenelektrode 14 liegt, kann eine Aussage über die Gesamthöhe der Schneeschicht 6 gewonnen werden. Auch diese Aussage ist umso genauer, je näher die einzelnen Elektrodenpaare 12 in Axialrichtung des Trägerkörpers 4 gesehen aneinander liegen.

Selbstverständlich sollten die einzelnen Elektroden der Elektrodenpaare 12a, 12b,...12f im wesentlichen auf einer gemeinsamen Umfangslinie liegen, d.h., unter Bezug auf die Spitze 8 bei vertikal angeordnetem Trägerkörper 4 im wesentlichen stets in gleicher Höhenlage (auf einer gleichen Umfangslinie des Trägerkörpers 4) sein.

Wächst die Höhe der Schneeschicht 6 über die normalerweise maximal zu erwartende Schneehöhe 38 gemäß Fig. 2 an und erreicht eine Höhe, wie in Fig. 2 mit der Strichdoppelpunktlinie 40 bezeichnet, ist auch das am Trägerkörper 4 an oberster Stelle liegende Elektrodenpaar (Elektrodenpaar 12a) von Schnee bedeckt. Eine Aussage über die momentan herschende Schneehöhe ist dann zwar nicht mehr möglich, jedoch bedeutet der Sachverhalt, daß auch das oberste Elektrodenpaar 12a, welches normalerweise über der maximal zu erwartenden Schneehöhe 38 liegt, eingeschneit ist, daß eine derart hohe Neuschneeauflage vorhanden ist, daß automatisch erhöhte Lawinengefahr herrscht.

Die über die Signalleitung 16a, 16b,...16f und 18 laufenden Signale gelangen zu der Auswerte- und Anzeigeeinheit 36. Diese Einheit 36 kann entweder von passiver Natur sein, d.h., sie muß mit einem von einer Bedienungsperson mitzuführenden Gerät verbunden werden, mit welchem die Einheit 36 veranlaßt wird, sequentiell die einzelnen Elektrodenpaare anzusteuern und die zurückkommenden Meßsignale betreffend die Leitfähigkeit oder den Widerstandswert auszugeben. Die Energieversorgung erfolgt hierbei nur im Moment des Anschlusses der Einheit 36 mit dem von der Bedienungsperson mitzuführenden Gerät. Genauso gut kann die Auswerte- und Anzeigeeinheit 36 aktiv sein, d.h. sie ist über einen - gegebenenfalls über Solarzellen nachladbaren - Akkumulator Selbstversorger und überwacht ständig die einzelnen Elektroden am Trägerkörper 4, indem sie beispielsweise in bestimmten Zeitintervallen die entsprechenden Abfragesignale an die Elektrodenpaare schickt und die zurückkommenden Auswertesignale verarbeitet und speichert, so daß die gewonnenen Meßwerte in einem bestimmten Turnus abgerufen oder ausgelesen werden können.

Eine weitere Möglichkeit ist in Fig. 3 schematisch dargestellt, bei der eine Mehrzahl von Trägerkörpern 4 jeweils mit einer Auswerte- und Anzeigeeinheit 36 verbunden ist. Diese Einheiten 36 stehen mit einer zentralen Meßwert-Sammelstelle 42 bevorzugt in einer drahtlosen Verbindung, beispielsweise über Funk. Die Sammelstelle 42 fragt turnusartig die einzelnen Auswerte- und Anzeigeeinheiten 36 ab, wertet die eingehenden Meßergebnisse aus und liefert diese Ergebnisse beispielsweise über einen Ausdruck 44 und/oder einen Monitor 46. Mit der Ausgestaltungsform von Fig. 3 kann auch ein größeres Gebiet mit der benötigten Anzahl von Trägerkörpern 4 abgedeckt und überwacht werden, wobei zu Gewinnung der einzelnen Ergebnisse eine einzige zentrale Sammelstelle 42 genügt, welche in drahtloser Verbindung mit den jeweiligen Auswerte- und Anzeigeeinheiten 36 ist.

Ist gemäß einer möglichen Ausgestaltungsform der vorliegenden Erfindung der Trägerkörper 4 in Form eines Skistocks ausgebildet, lassen sich im wesentlichen die gleichen Vorteile wie oben beschrieben erhalten: der Skistock trägt an seiner Außenoberfläche in Axialrichtung aufeinanderfolgend eine Mehrzahl von Elektrodenpaaren, welche über im Inneren des Skistocks verlaufende Signalleitungen mit einer verschließbaren Buchse beispielsweise im Bereich des Skistockhandgriffs in Verbindung stehen. Der Teller des Skistocks ist z.B. mit einem entsprechenden Schnellverschluß abnehmbar, wonach dann der Skistock etwa gemäß Fig. 1 in die Schneeschicht 6 gestoßen oder gerammt wird. An der Buchse wird eine mitzuführende Auswerte- und Anzeigeeinheit, welche auch die entsprechende Spannungsversorgung liefert, angeschlossen, so daß eine Aussage über den Aufbau des jeweiligen Schneeprofils möglich ist. Da hierbei der Meßvorgang nicht stationär, sondern nur kurzfristig vor Ort ist, ist es auch nicht zwingend notwendig, den Trägerkörper 4 aus einem thermisch schlecht leitenden Material auszugestalten, da die den Trägerkörper 4 umgebenden Schneeschichten während des Meßvorganges praktisch keine Gelegenheit haben, ihren Aggregatzustand (Schneekristall → Wasser → Eis) zu ändern.

Insbesondere Skitourengehern wird mit dieser Ausgestaltungsmöglichkeit des Trägerkörpers 4 eine Möglichkeit gegeben, den Trägerkörper quasi als unverzichtbares Teil ihrer Ausrüstung mitführen zu können/müssen. Die im Rucksack mitführbare Auswerte- und Anzeigeeinheit, welche nicht größer als ein üblicher elektronischer Terminplaner sein muß und welche an der entsprechenden Buchse beispielsweise im Griff des Skistocks anschließbar ist, kann dann eine rasche Aussage über den Aufbau und die Beschaffenheit des Schneeprofils erstellen, oder aber die Auswerte- und Anzeigeeinheit ermittelt selbstständig aus dem Schneeprofil die Lawinengefahr oder -wahrscheinlichkeit und zeigt diese auf einem einfachen Display z.B. mit 3 LEDs oder dergleichen etwa wie folgt unmißverständlich an: GRÜN = keine Lawinengefahr oder Lawinengefahr gering/Hang kann ohne größeres Risiko gequert, begangen oder befahren werden; GELB = gewisse Lawinengefahr vorhanden/Hang mit Vorsicht und z.B. nicht in Gruppen queren, begehen oder befahren; ROT = Lawinengefahr hoch bis sehr hoch/Hang nicht queren, begehen oder befahren, sondern umkehren oder Ausweichroute wählen. Die Auswerte- und Anzeigeeinheit kann gegebenenfalls auch mit einem der seit Jahren bekannten Lawinensuchgeräte (ORTOVOX™, etc.) kombiniert werden.

Bei der Ausgestaltung gemäß Fig. 2, bei der der Trägerkörper 4 am Gestell 32 aufgehängt ist und nach und nach eingeschneit wird, ist nicht nur der Vorteil gegeben, daß sich aufgrund des irgenwann einmal erreichten Schneeprofils eine Aussage über die Lawinengefährlichkeit (ausgedrückt in den Lawinenwarnstufen von 1 bis 4) treffen läßt, sondern es können auch beispielsweise im Zuge ganz normaler meterologischer Überwachungen die Schneehöhenzunahmen, d.h., der allmähliche Aufbau der Schneeschicht 6 protokolliert werden. Aussagen über die momentane Lawinensituation sind praktisch in Echtzeit möglich, da eine kontinuierliche Abfragung des sich entwickelnden Schneeprofils möglich ist, was im Gegensatz zur gegenwärtigen Schneeprofils-Ermittlungstechnik steht, die eine Aktualisierung des jeweiligen Zustands nur in bestimmten Zeitabständen zuläßt.

Ist der Trägerkörper 4 in Form eines Skistocks ausgestaltet, ist es auch denkbar, zwei oder mehr Skistöcke teleskopartig miteinander verbindbar zu machen, beispielsweise durch eine Schraub- oder Steckverbindung, um auch tiefergehende Schneeprofile erfassen zu können. Die Signalweiterführung von einem Skistock zum nächsten Skistock erfolgt z.B. über Steckverbinder.

Eine weitere mögliche Ausgestaltungsform des Trägerkörpers ist, diesen aus einem durchgehenden Schlauch auszubilden, der in Abständen Einschnürungen aufweist, um einzelne, axial beabstandete, jedoch untereinander in Verbindung stehende Segmente zu bilden. Die Tiefe der Einschnürungen ist hierbei derart, daß zwischen den einzelnen Segmenten ein bestimmtes, querschnittsmäßig jedoch eng dimensioniertes Lumen freibleibt. Jedes. Segment trägt eines oder mehrere Elektrodenpaare. Der gesamte Schlauch oder Trägerkörper wird mit Wasser gefüllt, dem ein Elektrolyt beigemischt ist, um elektrische Leitfähigkeit über die gesamte Trägerkörperlänge zu erhalten. An den beiden Trägerkörperenden wird z.B. ein elektrisches Potential angelegt, welches bei unversehrtem Trägerkörper einen Stromfluß durch dessen Elektrolytfüllung bewirkt. Hinsichtlich weiterer Einzelheiten betreffend den Trägerkörper in Form eines mit Elektrolytflüssigkeit gefüllten Schlauches sei auf die PCT-Veröffentlichung PCT/EP00/01493 (WO00/50283) des gleichen Anmelders verwiesen; auf den dortigen Offenbarungsgehalt wird hier insofern vollinhaltlich Bezug genommen.

Der so gebildete Trägerkörper wird aufrechtstehend im Boden verankert oder mit Hiulfe einer entsprechend schweren Bodenplatte aufgestellt, so daß der größte Teil seiner Längserstreckung nach oben vorragt. Im Sommer ist das sich im Schlauch befindliche Wasser flüssig und der Schlauch und damit Trägerkörper entsprechend flexibel oder geschmeidig, so daß er z.B. einwirkenden Windkräften elastisch ausweichen oder widerstehen kann. Wenn jedoch im Winter das Wasser im Schlauch gefriert, wird der Schlauch zu einem starren Körper. Schneeverfrachtungen oder -verschiebungen z.B. in Talrichtung wirken nun auf Druck und/oder Zug auf diesen starren Körper ein und bei Überschreiten eines Grenzwertes (bestimmt u.a. durch den Querschnitt des Lumens zwischen den einzelnen Segmenten, den Segmentabständen etc.) bricht der Schlauch (Trägerkörper) im Bereich zumindest einer Einschnürung: es kann kein elektrischer Strom mehr durch den Trägerkörper bzw. das Elektrolytwasser fließen und dieser Sachverhalt kann zu einer entsprechenden Signalausgabe und/oder -verarbeitung herangezogen werden. Kritische, d.h. lawinen-, aber auch muren-, steinschlag- oder erdrutschgefährdete Hänge oder Gebiete können mit einer Vielzahl derartiger Trägerkörper "gespickt" werden, um eine möglichst lückenlose Überwachung zu gewährleisten, wobei die Aufwendungen z.B. im Vergleich zu Laserüberwachung wesentlich verringert sind. Gleichzeitig ist über die Mehrzahl von Elektrodenpaaren an den einzelnen Segmenten eine kontinuierliche Schneehöhen- und/oder Schneeprofilüberwachung möglich.

Die Beschreibung des Gegenstands der vorliegenden Erfindung erfolgte anhand der bevorzugten Ausgestaltungsform einer Vorrichtung bzw. eines Verfahrens zur Ermittlung eines Schneeprofils, um eine Aussage über die herrschende Lawinensituation machen zu können. Es versteht sich, daß der Gegenstand der vorliegenden Erfindung nicht hierauf beschränkt ist. Beispielsweise erlaubt die Feststellung der Schneebeschaffenheit über den jeweiligen elektrischen Leitwert oder die elektrische Leitfähigkeit auch Hinweise dahingehend, welches Skiwachs für die vorherrschende Schneequalität optimal ist. Dies ist insbesondere für Skilangläufer von Interesse. Betreiber von Skipisten können mit der erfindungsgemäßen Vorrichtung bzw. unter Anwendung des erfindungsgemäßen Verfahrens Auskunft über Aufbau und Beschaffenheit ihrer Skipisten erlangen, beispielsweise ob es notwendig ist, die Schneeschicht mit Pistenraupen weiter zu verdichten. Läßt man einen Trägerkörper 4 etwa gemäß Fig. 2 frei hängend in einem Gewässer eingetaucht einfrieren, ist es möglich, durch die sich an den Grenzflächen Luft/Eis und Eis/Wasser schlagartig ändernden elektrischen Leitfähigkeiten bzw. elektrischen Widerstandswerte Aussagen über die Dicke und damit Tragfähigkeit des Eises zu erhalten. Unfälle durch in Natureis einbrechende Wintersportler können hierdurch vermieden werden. Weiterhin ist es möglich, winterliche Straßenverhältnisse zu überwachen, beispielsweise hinsichtlich Eisbildung, Neuschneeauflage etc., so daß seitens der Räumdienste entsprechend vorbeugende Maßnahmen getroffen werden können. Eine weitere Möglichkeit ist, die Eisbildung beispielsweise an Flugzeugtragflächen zu überwachen.

Beschrieben wurde insoweit zusammenfassend eine Vorrichtung zur Ermittlung eines Schneeprofils über die Höhenerstreckung einer Schneeschicht hinweg, mit einem langgestreckten Trägerkörper, welcher in der Schneeschicht im wesentlichen senkrecht zum Schneeschichtungsverlauf anordenbar ist und an seiner Außenseite wenigstens zwei elektrisch voneinander isolierte Elektrodengruppen trägt, wobei jede Elektrodengruppe am Trägerkörper umfangsseitig voneinander beabstandete und elektrisch voneinander isolierte Elektroden im wesentlichen auf einer gemeinsamen Umfangslinie liegend aufweist, welche die elektrische Leitfähigkeit des zwischen ihnen vorhandenen Mediums (Schnee) messen. Gegenstand der vorliegenden Erfindung ist weiterhin ein Verfahren zur Ermittlung des Schneeprofils über die Höhenerstreckung der Schneeschicht hinweg und ein System zur Ermittlung der Lawinenwahrscheinlichkeit in einem zu überwachenden Gebiet unter Verwendung der Vorrichtung und/oder unter Anwendung des Verfahrens. Mit dem Gegenstand der Erfindung können Schneeprofile rasch und exakt ohne großen personellen und finanziellen Aufwand in Echtzeit erhalten werden.

## Patentansprüche

1. Eine Vorrichtung zur Ermittlung eines Schneeprofils über die Höhenerstreckung einer Schneeschicht (6) hinweg, mit einem langgestreckten Trägerkörper (4), welcher in der Schneeschicht (6) im wesentlichen senkrecht zum Schneeschichtungsverlauf anordenbar ist und an seiner Außenseite wenigstens zwei elektrisch voneinander isolierte Elektrodengruppen (10, 10b,...) trägt, wobei jede Elektrodengruppe am Trägerkörper (4) umfangsseitig voneinander beabstandete und elektrisch voneinander isolierte Elektroden im wesentlichen auf einer gemeinsamen Umfangslinie liegend aufweist, welche die elektrische Leitfähigkeit des zwischen ihnen vorhandenen Mediums messen.

2. Vorrichtung nach Anspruch 1, **dadurch gekennzeichnet, daß** jede Elektrodengruppe (10a, 10b,...) ein Elektrodenpaar (12a, 12b,...) aufweist.

3. Vorrichtung nach Anspruch 2, **dadurch gekennzeichnet, daß** die Elektroden jedes Elektrodenpaars (12a, 12b,...) an diametral gegenüberliegenden Seiten des Trägerkörpers (4) angeordnet sind.

4. Vorrichtung nach einem der Ansprüche 1 bis 3, **dadurch gekennzeichnet, daß** eine Mehrzahl von Elektrodengruppen (10a, 10b,...) entlang der Längserstreckung des Trägerkörpers (4) angeordnet ist.

5. Vorrichtung nach Anspruch 4, **dadurch gekennzeichnet, daß** die Elektrodengruppen (10a, 10b,...) äquidistant zueinander entlang der Längserstreckung des Trägerkörpers (4) angeordnet sind.

6. Vorrichtung nach einem der Ansprüche 1 bis 5, **dadurch gekennzeichnet, daß** der Trägerkörper (4) an einem Endabschnitt (8) eine Referenz-Einzelelektrode (14) aufweist.

7. Vorrichtung nach einem der Ansprüche 1 bis 6, **dadurch gekennzeichnet, daß** der Trägerkörper (4) aus einem elektrisch isolierenden Material gefertigt ist.

8. Vorrichtung nach einem der Ansprüche 1 bis 7, **dadurch gekennzeichnet, daß** der Trägerkörper (4) aus einem thermisch schlecht leitenden Material gefertigt ist.

9. Vorrichtung nach Anspruch 7 oder 8, **dadurch gekennzeichnet, daß** der Trägerkörper (4) aus Kunststoff oder Kunstharz gefertigt ist.

10. Vorrichtung nach einem der Ansprüche 1 bis 9, **dadurch gekennzeichnet, daß** die Elektroden der einzelnen Elektrodengruppen (10a, 10b,...) und die Einzelelektrode (14) über im Inneren des Trägerkörpers (4) verlaufende Signalleitungen (16a, 16b,..., 18) mit einer externen Auswerte- und Anzeigeeinheit (36) verbindbar sind.

11. Vorrichtung nach einem der Ansprüche 1 bis 10, **dadurch gekennzeichnet, daß** die Elektroden der einzelnen Elektrodengruppen (10a, 10b,...) und die Einzelelektrode (14) in das Material des Trägerkörpers (4) eingebettet sind.

12. Vorrichtung nach einem der Ansprüche 1 bis 10, **dadurch gekennzeichnet, daß** die Elektroden der einzelnen Elektrodengruppen (10a, 10b,...) und die Einzelelektrode (14) auf das Material des Trägerkörpers (4) aufgebracht sind.

13. Vorrichtung nach Anspruch 12, **dadurch gekennzeichnet, daß** die Elektroden der einzelnen Elektrodengruppen (10a, 10b,...) und die Einzelelektrode (14) auf das Material des Trägerkörpers (4) aufgeklebt sind.

14. Vorrichtung nach Anspruch 12, **dadurch gekennzeichnet, daß** die Elektroden der einzelnen Elektrodengruppen (10a, 10b,...) und die Einzelelektrode (14) auf das Material des Trägerkörpers (4) aufgedampft sind.

15. Vorrichtung nach einem der Ansprüche 1 bis 14, **dadurch gekennzeichnet, daß** der Trägerkörper (4) ein Skistock ist.

16. Ein Verfahren zur Ermittlung eines Schneeprofils über die Höhenerstreckung einer Schneeschicht (6) hinweg, mit den folgenden Schritten:
a) Bereitstellen eines langgestreckten Trägerkörpers (4), der wenigstens zwei Elektrodengruppen (10a, 10b,...) trägt, wobei jede Elektrodengruppe am Trägerkörper (4) umfangsseitig voneinander beabstandete Elektroden im wesentlichen auf einer gemeinsamen Umfangslinie liegend aufweist;
b) Anordnen des Trägerkörpers (4) in der Schneeschicht (6) im wesentlichen senkrecht zum Schneeschichtungsverlauf; und
c) Messen der elektrischen Leitfähigkeit des zwischen den einzelnen Elektroden der jeweiligen Elektrodengruppen (10a, 10b,...) vorhandenen Mediums.

17. Verfahren nach Anspruch 16, **gekennzeichnet durch**: paarweises Anordnen der Elektroden an diametral gegenüberliegenden Seiten des Trägerkörpers (4).

18. Verfahren nach Anspruch 16 oder 17, **gekennzeichnet durch**: äquidistantes Anordnen einer Mehrzahl von Elektrodengruppen oder -paaren (12a, 12b,...) entlang der Längserstreckung des Trägerkörpers (4).

19. Verfahren nach einem der Ansprüche 16 bis 18, **gekennzeichnet durch**: Anordnen einer Referenz-Einzelelektrode (14) an einem Endabschnitt (8) des Trägerkörpers (4).

20. Verfahren nach einem der Ansprüche 16 bis 19, **gekennzeichnet durch**: Ausbilden des Trägerkörpers (4) aus einem elektrisch isolierenden und thermisch schlecht leitenden Material, insbesondere Kunststoff oder Kunstharz.

21. Verfahren nach einem der Ansprüche 16 bis 20, **gekennzeichnet durch**: Verbinden der Elektroden der einzelnen Elektrodengruppen (10a, 10b,...) und der Einzelelektrode (14) über im Inneren des Trägerkörpers (4) verlaufende Signalleitungen (16a, 16b,..., 18) mit einer externen Auswerte- und Anzeigeeinheit (36).

22. Verfahren nach einem der Ansprüche 16 bis 21, **gekennzeichnet durch**: endseitiges freies Aufhängen des Trägerkörpers (4) an einer Aufhängevorrichtung (32); Einschneienlassen des Trägerkörpers (4); und Belassen des Trägerkörpers (4) in der sich bildenden Schneeschicht (6).

23. Verfahren nach Anspruch 22, **gekennzeichnet durch**: drahtloses Übertragen der Ausgangssignale der Elektrodengruppen (10a, 10b,...) und/oder der Einzelelektrode (14) oder der Auswerte- und Anzeigeangaben der externen Auswerte- und Anzeigeeinheit (36) an eine zentrale Meßwert-Sammelstelle (42).

24. Verfahren nach Anspruch 23, **gekennzeichnet durch**: drahtloses Übertragen und Sammeln der Ausgangssignale der Elektrodengruppen (10a, 10b,...) und/oder der Einzelelektroden (14) oder der Auswerte- und Anzeigeangaben der externen Auswerte- und Anzeigeeinheiten (36) einer Mehrzahl von Trägerkörpern (4) an die und in der zentralen Meßwert-Sammelstelle (42).

25. Verfahren nach einem der Ansprüche 16 bis 21, **gekennzeichnet durch**: Ausbilden des Trägerkörpers (4) in Form eines Skistocks; Einstechen des Skistocks in die Schneeschicht (6); Ablesen der Auswerte- und Anzeigeangaben auf einer externen Auswerte- und Anzeigeeinheit; und Herausziehen des Skistocks aus der Schneeschicht (6).

26. System zur Ermittlung der Lawinenwahrscheinlichkeit in einem zu überwachenden Gebiet unter Verwendung einer Vorrichtung nach wenigstens einem der Ansprüche 1 bis 15 und/oder unter Anwendung des Verfahrens nach wenigstens einem der Ansprüche 16 bis 25.
